# EUROPÄISCHE PATENTSCHRIFT

(11) **EP 0 393 370 B1**
(45) Veröffentlichungstag und Bekanntmachung des Hinweises auf die Patenterteilung: **23.02.1994**
(21) Anmeldenummer: 90105284.5
(22) Anmeldetag: 21.03.1990
(51) Int. Cl.: B29C 49/48

(54) **Vorrichtung zum Blasformen eines Hohlkörpers**
Apparatus for blow moulding hollow articles
Dispositif pour le montage par soufflage d'un corps creux

(30) Priorität: 21.04.1989 DE 3913087
(43) Veröffentlichungstag der Anmeldung: 24.10.1990
(73) Patentinhaber: MAUSER-WERKE GmbH, D-50321 Brühl (DE)
(72) Erfinder: Przytulla, Dietmar, D-5014 Kerpen (DE)

(56) Entgegenhaltungen:
- BE-A- 642 383
- DE-U- 8 905 020
- GB-A- 882 790

## Beschreibung

Die Erfindung betrifft eine Vorrichtung zum Blasformen eines mit Spannring und Faßdeckel verschließbaren Deckelfaßkörpers aus thermoplastischem Kunststoff mit einem aus der Umfangswand bzw. dem Faßmantel des Deckelfaßkörpers radial nach außen vorstehenden Mantelflanschring als Gegenlager für den Spannring, mit einer Blasform, die eine umlaufende ringförmige Ausnehmung aufweist, welche zum Erzeugen bzw. Anstauchen des Mantelflanschringes am Deckelfaßkörper durch einen gegenüber einem feststehenden Blasformteil axial verschiebbaren Formschieber veränderbar ausgebildet ist.

Die Erfindung betrifft weiterhin ein Verfahren zum Herstellen eines Kunststoff-Hohlkörpers, insbesondere eines Deckelfasses mit Deckel, in dieser Vorrichtung und damit auch einen nach diesem Verfahren hergestellten Kunststoff-Hohlkörper mit Kunststoff-Deckel. Die Erfindung beschränkt sich nicht nur auf rotationssymetrische Hohlkörper (Fässer), sondern bezieht sich auch auf quaderförmige Hohlkörper mit z.B. rechteckförmigem bzw. quadratischem Querschnitt.

Die in der Blasform aus der Hohlkörperwandung ausgeformten Flanschringe dienen bei geschlossenen Hohlkörpern, beispielsweise Spundfässern als Rollreifen oder Transportringe. Ein derartiges Spundfaß sowie eine entsprechende Blasform mit zwei Formschiebern zum Anstauchen von Rollreifen ist z.B. aus der GB-A-882 790 vorbekannt. Bei quaderförmigen Hohlkörpern dienen die aus der Hohlkörperwandung ausgeformten geschlossenen Flanschvorsprünge auch als Wandverstärkungen.

Bei mit Kunststoff-Deckeln verschließbaren Kunststoff-Fässern, sogenannten Weithalsgebinden, unter denen man im allgemeinen großvolumige Behälter bzw. Fässer (z.B. 220 l Fassungsvermögen) mit einer Einfüllöffnung bzw. einem Deckel versteht, die/der im wesentlichen gleichgroß wie der Faßdurchmesser ist, besteht der Flanschring ebenfalls aus einem gestauchten Mantelflansch, der entsprechend einem aus der DE-PS 25 44 491 bekannten Deckelfaßkörper mit Abstand unterhalb der Faßöffnung angeordnet ist, und gegen den der Rand des auf den Öffnungshals des Faßkörpers aufgestülpten Deckels anliegt. Der Deckel-Randflansch stimmt in seiner radialen Ausdehnung mit dem Mantelflansch des Faßkörpers überein und überträgt Stapelkräfte in axialer Richtung in die Faßwandung. In der Verschlußlage wird der Deckel mit einem den Deckelrand einerseits übergreifenden und den Mantelflansch andererseits untergreifenden Spannring auf dem Faßkörper befestigt. Um eine hohe Stapelbarkeit der Fässer zu gewährleisten, besteht der Deckel als separat gefertigtes Spritzgußteil aus Hartkunststoff.

Kunststoff-Deckel für Deckelfässer werden üblicherweise in einem getrennten Arbeitsgang als Spritzgußteil vorgefertigt. Außer einem separaten Spritzguß-Herstellungsverfahren sind hierfür also auch besondere Spritzgußwerkzeuge erforderlich.

Randflansche an Kunststoff-Fässern können auf verschiedene Art und Weise hergestellt werden. So ist es z.B. bekannt, daß ein vorgefertigter Randflansch als separates Spritzgußteil in eine Blasform eingelegt wird, wobei dieser Randflansch bei dem Herstellungsvorgang bzw. Blasformen des Fasses auf dessen Außenwandung verschweißt wird.

Der vorliegenden Erfindung liegt die Aufgabe zugrunde, eine Faßkörper- und Deckelherstellung in einem Arbeitsgang im Blasformverfahren in einer einzigen Blasform zu ermöglichen.

Dies geschieht erfindungsgemäß mittels einer konstruktiven Blasformvorrichtung, wie sie im Patentanspruch 1 gekennzeichnet ist.

Durch die besondere Ausgestaltung der Blasform mit zwei axial verschiebbaren Formschiebern kann die Faßkörper- und Deckelherstellung in einer einzigen Blasform mit einem sogenannten Tandemschieber zusammengefaßt werden, wodurch die Herstellung wesentlich verkürzt und kostengünstiger gestaltet wird. Ein zusätzlicher Maschinen- und Werkzeugaufwand entfällt dadurch.

Die gemeinsame Faßkörper- und Deckelherstellung erfolgt nach dem erfindungsgemäßen Verfahren mittels einer einzigen Blasform dadurch, daß der Hohlkörper bzw. Deckelfaßkörper und dazugehörige Deckel in einem Arbeitsgang gleichzeitig in der Blasform ausgeblasen werden, wobei die Formgebung eines Mantelflansches am Hohlkörper und eines Ringflansches am Deckel durch Einblasen eines Schlauches in zwei in der Blasform angeordnete Ringausnehmungen mit anschließender axialer Stauchbewegung erfolgt und nach der Formgebung der Deckel vom Hohlkörper bzw. Deckelfaßkörper getrennt wird. Nach dem Ausformen des fertig geblasenen noch einteiligen Produktes braucht lediglich der Deckel vom Faßkörper bzw. ein dazwischen liegender verlorener Verbindungsring abgetrennt zu werden, um den Faßkörper und den Deckel zu verselbständigen.

In den Zeichnungen sind eine Ausführungsform der erfindungsgemäßen Blasform und des darin erzeugten Produktes beispielhaft dargestellt.

Es zeigen:
- Figur 1: eine Blasform mit geöffneten Schiebern und ausgeblasenem Kunststoffschlauch,
- Figur 2: die Blasform bei sich in Richtung der Formachse bewegenden Schiebern,
- Figur 3: die Blasform bei geschlossenen Schiebern und
- Figur 4: eine Faßkörper-Deckeleinheit nach dem Ausformen aus der Blasform.

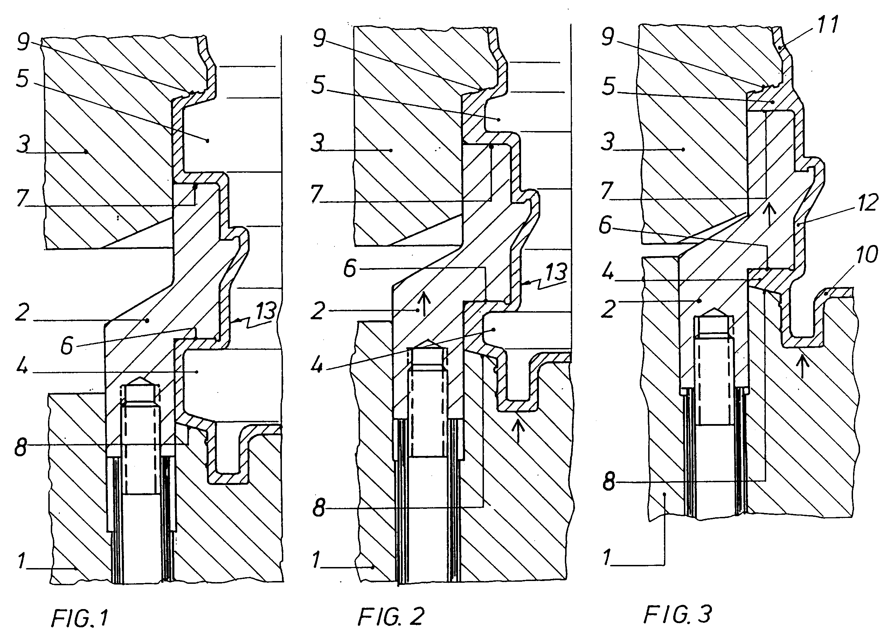

In den Figuren ist aus Gründen besserer Übersicht nur der hier interessierende Formausschnitt dargestellt. Zwischen dem Formschieber 1 und dem feststehenden Formteil 3 ist gemäß Figur 1 der Formschieber 2 eingeschaltet und im Formschieber 1 einerseits und im feststehenden Formteil 3 andererseits in Formachsrichtung verschiebbar geführt.

Bei geöffneter Blasform liegt der ausgeblasene Kunststoffschlauch 13 gegen die Forminnenkonturen an. Durch die Stirnfläche 6 des zweiten Formschiebers 2 und die Stirnfläche 8 des ersten Formschiebers 1 wird die Ringausnehmung 4 begrenzt. Die Stirnfläche 7 des zweiten Formschiebers 2 und die Stirnfläche 9 des feststehenden Formteils 3 begrenzen eine zweite Ringausnehmung 5. Die Umfangswände in den entsprechenden Formteilen 2,3 begrenzen die radiale Erstreckung der Ringausnehmungen 4 und 5.

Bei noch schweißfähigem Warmzustand des anliegenden Schlauches 13 fahren Formschieber 1 und Formschieber 2 in Richtung auf den feststehenden Formteil 3. Die Hubgeschwindigkeit des zweiten Formschiebers 2 ist geringer und sein Hubweg ist kürzer als die Hubgeschwindigkeit und der Hubweg des ersten Formschiebers 1.

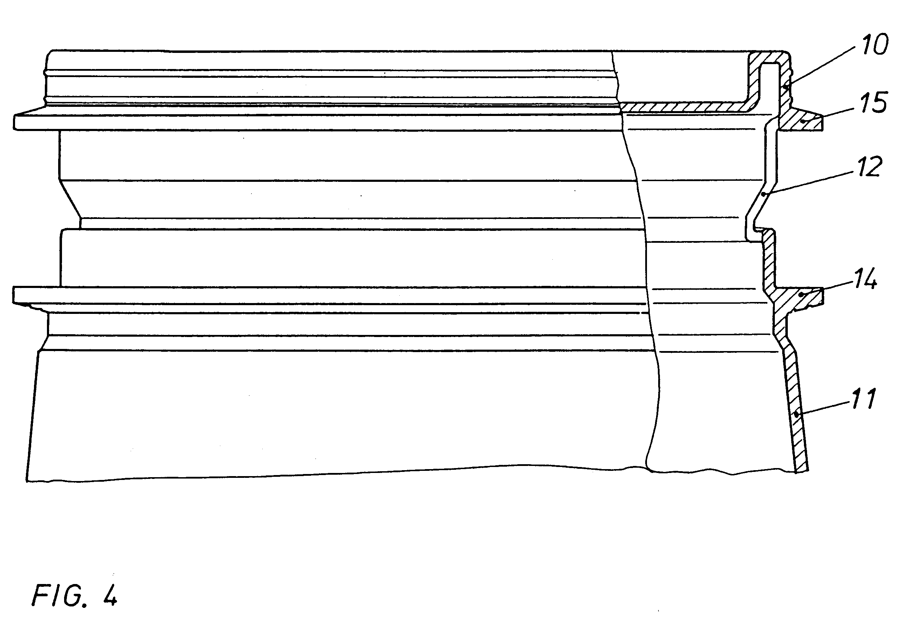

Figur 2 zeigt die Blasform 3 in einem Zustand, in welchem die verschiebbaren Formteile 1 und 2 etwa den halben Schließweg in Pfeilrichtung zurückgelegt haben. Dabei wird nur das in den Ringausnehmungen 4 und 5 einliegende Schlauchmaterial zusammengestaucht, bis es entsprechend der in Figur 3 gezeigten Endstellung zu den massiven Flanschringen 14 und 15 (Fig. 4) zusammengepreßt und verschweißt ist. Diese Endstellung erreichen die beweglichen Formschieber 1 und 2 zur gleichen Zeit.

Wie aus Figur 4 zu entnehmen ist, wurde die aus der Blasform entnommene Faßkörper-Deckel-Einheit um 180° gedreht. Nachzutragen ist noch, daß die Blasform in Längsrichtung geteilt ist und die beiden Formhälften in die Öffnungs- und Schließstellung verfahrbar sind.

Wie gezeigt verbindet Faßkörper 11 und Deckel 10 noch ein Zwischen-Ringstück 12. Dieser verlorene Verbindungsring 12 zwischen Faßkörper 11 und Deckel 10 wird herausgetrennt, so daß Faßkörper 11 und Deckel 10 selbständige Teile werden. Der abzutrennende Zwischenring 12 ist zur besseren Kenntlichmachung seiner Erstreckung nicht schraffiert.
Die Blasform kann jedoch auch so ausgebildet sein, daß der verlorene Zwischenring 12 entfällt. Kennzeichnendes Merkmal des erfindungsgemäßen Fasses ist, daß Faßkörper und Deckel aus dem gleichen Kunststoff-Material bestehen (aus einem Schlauch hergestellt wurden und einen gleichen Faserverlauf aufweisen) und somit auch die gleiche Farbe aufweisen.

## Patentansprüche

1. Vorrichtung zum Blasformen eines mit Spannring und Faßdeckel (10) verschließbaren Deckelfaßkörpers (11) aus thermoplastischem Kunststoff mit einem aus der Umfangswand (Faßmantel) des Deckelfaßkörpers (11) radial nach außen vorstehenden Mantelflanschring (14) als Gegenlager für den Spannring,
mit einer Blasform, die eine umlaufende ringförmige Ausnehmung (4,5) aufweist, welche zum Erzeugen (Anstauchen) des Mantelflanschringes (14) am Deckelfaßkörper (11) durch einen gegenüber einem feststehenden Blasformteil (3) axial verschiebbaren Formschieber (1) veränderbar ausgebildet ist, **dadurch gekennzeichnet,** daß zwischen dem festen Blasformteil (3) und dem ersten Formschieber (1) in Axialrichtung gesehen ein zweiter verschiebbarer ringförmiger Formschieber (2) mit einer zweiten veränderbaren, ringförmigen Ausnehmung (5) vorgesehen ist, wobei die beiden hintereinander angeordneten Formschieber (1) und (2) in gleicher Richtung gegen das feststehende Blasformteil (3) verschiebbar ausgebildet sind, und wobei während des Blasformvorganges in der Ausnehmung (4) des ersten Formschiebers (1) ein Deckelflanschrand (15) und in der Ausnehmung (5) des zweiten Formschiebers (2) der Mantelflanschring (14) des zu diesem Zeitpunkt noch mit dem Faßdeckel (10) zusammenhängenden Deckelfaßkörpers (11) anstauchbar sind.

2. Vorrichtung nach Anspruch 1,
**dadurch gekennzeichnet,** daß durch die Stirnfläche (6) des zweiten Formschiebers (2) und die Stirnfläche (8) des ersten Formschiebers (1) die Ringausnehmung (4) und durch die Stirnfläche (7) des zweiten Formschiebers (2) und die Stirnfläche (9) des feststehenden Formmittelteils (3) eine zweite Ausnehmung (5) begrenzt sind, und daß beim Zusammenfahren der beweglichen Formschieber (1,2) der Hubweg des zweiten Formschiebers (2) kürzer als der Hubweg des ersten Formschiebers (1) ausgebildet ist.

3. Verfahren zum Herstellen eines Kunststoff-Hohlkörpers, insbesondere eines Deckelfasses mit Deckel, mitttels einer Blasform,
**dadurch gekennzeichnet,** daß der Hohlkörper bzw. Deckelfaßkörper und dazugehörige Deckel in einem Arbeitsgang gleichzeitig in der Blasform ausgeblasen werden, wobei die Formgebung eines Mantelflansches am Hohlkörper und eines Ringflansches am Deckel durch Einblasen eines Schlauches in zwei in der Blasform angeordnete Ringausnehmungen mit anschließender axialer Stauchbewegung erfolgt und nach der Formgebung der Deckel vom Hohlkörper bzw. Deckelfaßkörper getrennt wird.

4. Verfahren nach Anspruch 3,
**dadurch gekennzeichnet,** daß zwei in der Blasform angeordnete Formschieber zur Flanschausformung mit unterschiedlichen Hubgeschwindigkeiten und mit unterschiedlichen Hubwegen verschoben werden.

5. Verfahren nach Anspruch 4,
**dadurch gekennzeichnet,** daß die Hubgeschwindigkeit des zweiten Formschiebers geringer und sein Hubweg kürzer als die Hubgeschwindigkeit und der Hubweg des ersten Formschiebers ist.

6. Verfahren nach Anspruch 4 oder 5,
**dadurch gekennzeichnet,** daß die beiden Formschieber mit unterschiedlichen Hubgeschwindigkeiten verschoben werden, jedoch gleichzeitig ihre Endposition erreichen.

## Claims

1. Apparatus for blow moulding a barrel body (11) made of thermoplastics material and closable by a clamping ring and a barrel cover (10) and having a casing flange ring (14) which serves as a counterbearing for the clamping ring and which projects radially outwards from the circumferential wall (barrel casing) of the barrel body (11), the said apparatus comprising a blow mould which has a circumferential annular recess (4,5) which, for the purpose of producing (squeezing) the casing flange ring (14) on the barrel body (11), is formed so as to be modifiable by a mould slide (1) which is axially displaceable in relation to a stationary blow mould part (3), characterised in that a second displaceable annular mould slide (2) having a second modifiable annular recess (5) is provided between the fixed blow mould part (3) and the first mould slide (1) viewed in the axial direction, the two successively arranged mould slides (1) and (2) being formed so as to be displaceable towards the stationary blow mould part (3) in the same direction, and a flanged edge (15) of the cover being squeezable in the recess (4) of the first mould slide (1), and the casing flange ring (14) of the barrel body (11), which at this point is still connected to the barrel cover (10), being squeezable in the recess (5) of the second mould slide (2) during the blow moulding process.

2. Apparatus according to claim 1, characterised in that the annular recess (4) is bounded by the end surface (6) of the second mould slide (2) and the end surface (8) of the first mould slide (1) and a second recess (5) is bounded by the end surface (7) of the second mould slide (2) and the end surface (9) of the stationary mould part (3), and in that the path of travel of the second mould slide (2) is shorter than the path of travel of the first mould slide (1) when the movable mould slides (1,2) are brought together.

3. A method of manufacturing a plastics hollow article, in particular a barrel with cover, by means of a blow mould, characterised in that the hollow article or barrel body and associated cover are simultaneously blown out in the blow mould in one operation, a casing flange being formed on the hollow article and a ring flange being formed on the cover by a tube being blown into two annular recesses arranged in the blow mould with a subsequent axial squeezing movement and the cover being separated from the hollow article or barrel body after the forming process.

4. A method according to claim 3, characterised in that two mould slides arranged in the blow mould are displaced at different rates of travel and with different paths of travel for forming the flanges.

5. A method according to claim 4, characterised in that the rate of travel of the second mould slide is lower and its path of travel shorter than the rate of travel and the path of travel of the first mould slide.

6. A method according to claim 4 or 5, characterised in that the two mould slides are displaced at different rates of travel but reach their end positions simultaneously.

## Revendications

1. Dispositif pour le soufflage du corps (11) d'un tonneau à couvercle en matière synthétique thermoplastique, qui est fermable par un couvercle (10) et un anneau tendeur et qui comporte un rebord annulaire (14) saillant radialement vers l'extérieur et servant de contre-butée à l'anneau tendeur, ledit dispositif comporte un moule de soufflage pourvu d'un évidement annulaire (4) qui s'étend sur toute sa périphérie et qui peut être modifié, en vue de la fabrication (par compression) du rebord annulaire (14) du corps creux (11) du tonneau à couvercle, grâce à un coulisseau (1) déplaçable axialement par rapport à une partie de moule fixe (3) *caractérisé en ce que* vu axialement, un second coulisseau annulaire mobile (2) avec un évidement annulaire modifiable (5) est prévu entre la partie de moule fixe (3) et le premier coulisseau (1), les deux coulisseaux (1), (2) disposés à la suite l'un de l'autre, étant déplaçables dans la même direction par rapport à la partie de moule fixe (3), où pendant le processus de soufflage, un rebord (15) du couvercle est formé par compression dans l'évidement (4) du premier coulisseau (1) alors qu'un rebord annulaire (14) du corps du tonneau est formé par compression dans l'évidement (5) du second coulisseau (2), le couvercle (10) et le corps (11) du tonneau étant encore reliés à ce stade du processus de fabrication.

2. Dispositif selon la revendication 1 *caractérisé en ce que* la surface frontale (6) du second coulisseau (2) et la surface frontale (8) du premier coulisseau (1) déterminent l'évidement annulaire (4), et, la surface frontale (7) du second coulisseau (2) et la surface frontale (9) de la partie de corps fixe (3) déterminent l'évidement annulaire (5) et *en ce que* lors de la fermeture des coulisseaux (1), (2), le chemin d'élévation du second coulisseau (2) est plus court que celui du premier colisseau (1).

3. Procédé de fabrication d'un corps creux en matière synthétique, en particulier d'un tonneau à couvercle, au moyen d'un moule de soufflage, *caractérisé en ce que* le corps creux ou corps du tonneau à couvercle, et le couvercle correspondant, sont soufflés simultanément au cours d'une même phase de travail et *en ce que* le rebord du corps du tonneau et le rebord annulaire du couvercle sont obtenus par soufflage du tuyau dans les deux évidements annulaires ménagés dans le moule de soufflage, grâce au mouvement axial subséquent en vue de la compression, le couvercle et le corps creux ou corps du tonneau étant séparés après le processus de façonnage.

4. Procédé selon la revendication 3 *caractérisé en ce que* les deux coulisseaux disposés dans le moule de soufflage et servant à la fabrication des rebords annulaires, sont déplacés chacun avec une vitesse différente et sur un chemin d'élévation différent.

5. Procédé selon la revendication 4 *caractérisé en ce que* la vitesse d'élévation du second coulisseau est plus petite que celle du premier coulisseau et *en ce que* le chemin d'élévation du second coulisseau est plus court que celui du premier coulisseau.

6. Procédé selon les revendications 4 ou 5 *caractérisé en ce que* les deux coulisseaux qui sont déplacés à des vitesses d'élévation différentes, doivent atteindre simultanément leur position finale respective,
